# EUROPEAN PATENT SPECIFICATION

(11) **EP 3 944 645 B1**
(45) Date of publication and mention of the grant of the patent: **01.05.2024**
(21) Application number: 20840638.9
(22) Date of filing: 01.06.2020
(51) Int. Cl.: H04W 4/24, H04M 15/00, H04L 12/14

(54) **CHARGING METHOD, APPARATUS AND SYSTEM, AND COMPUTER READABLE STORAGE MEDIUM**
LADEVERFAHREN, -VORRICHTUNG UND -SYSTEM SOWIE COMPUTERLESBARES SPEICHERMEDIUM
PROCÉDÉ, APPAREIL ET SYSTÈME DE CHARGE, ET SUPPORT D'ENREGISTREMENT LISIBLE PAR ORDINATEUR

(30) Priority: 18.07.2019 CN 201910649905
(43) Date of publication of application: 26.01.2022
(73) Proprietor: ZTE Corporation, shenzhen Guangdong 518057 (CN)
(72) Inventor: LIN, Kai, Shenzhen, Guangdong 518057 (CN)
(74) Representative: Swindell & Pearson Limited
(86) International application number: PCT/CN2020/093809
(87) International publication number: WO 2021/008256

(56) References cited:
- EP-A1- 3 301 957
- CN-A- 1 983 940
- CN-A- 1 983 940
- CN-A- 1 983 940
- CN-A- 101 488 864
- CN-A- 101 488 864
- CN-A- 102 067 513
- CN-A- 105 634 752
- CN-A- 106 465 084
- CN-B- 101 488 864
- US-A1- 2007 173 226
- US-A1- 2015 029 894
- US-B1- 8 463 671

## Description

### TECHNICAL FIELD

The present invention relates to, but not limited to, the technical field of network communication, and in particular, to a method, apparatus and system for charging, and a computer readable storage medium.

### BACKGROUND

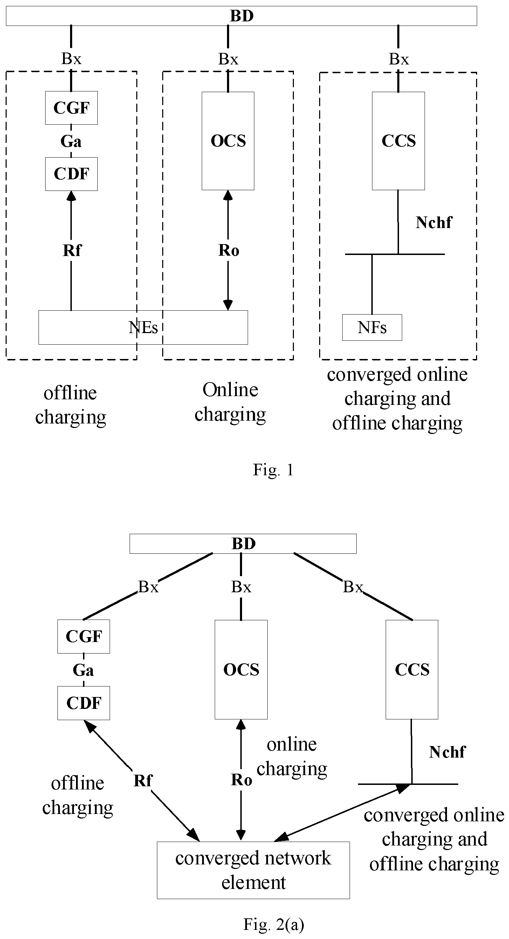

A leap development of mobile communication from voice to data services has profoundly changed people's lifestyles and has greatly promoted the rapid development of society and economy. Mobile Internet and Internet of Things are the main driving forces for the development of mobile communication in the future. As shown in Fig. 1, in a typical mobile communication system, for example, in a traditional 4G network, two charging solutions for public data network gateway (PGW, PDN gateway), including real-time charging for a prepaid user based on a Ro interface, and offline charging for the user based on a Ga interface, are used. In 5G network, a Service-Based Interface (SBI) (i.e., Nchf interface in Fig. 1) is introduced, which supports both online charging and offline charging.

Under related charging architectures of 5G network, interaction with a billing domain only through the Nchf interface has inevitable defects, which cannot meet the requirements for charging in 5G network environment. When there is disconnection of the Nchf interface or an abnormality occurs to the converged charging system (CCS), charging information generated by service network functions (NFs) can only be temporarily cached locally. Due to the small local storage space, the cached charging information is likely to be lost. Since users' fees are no longer controlled by the CCS in real time, the high bandwidth of 5G may cause losses to operators and may also incur significant Internet costs for users.

CN101488864B discloses a charging system and charging method for communication network, the charging system can support on-line charging and off-line charging. The charging system comprises a synergetic charging device for determining a service as on-line charging or off-line charging and performing charging for the service based on a charging event corresponding to the service and generating a charging data record; and a charging gateway device for preprocessing the charging data record from a charging function and transmitting to a background processing system.

EP3301957A1 discloses a charging method, a network device, and a system, so as to recover an online charging function in a timely manner when an OCS failure is rectified. The method includes: performing, by a PCEF, online charging for UE; when learning that an online charging system OCS is unavailable, switching, by the PCEF, the UE from online charging to offline charging, and starting an offline timer; and if the PCEF learns, before the offline timer expires, that the OCS becomes available, restoring, by the PCEF, the UE from offline charging to online charging. According to the solutions, after a user is switched to offline charging, an online charging function can be recovered in a timely manner when the OCS becomes available.

CN1983940A discloses a cost system and a method that combines with online charging and offline charging, the charging method includes: a net element sending an offline charging request of a use's online charging status information to a charging collection function entity; the charging collection function entity creates an offline charging word list according to the offline charging request, and sends it to a charging domain, the offline charging word list includes the use's online charging status information; the charging domain side recognizes the online charging status information of the offline charging word list and processes charging according to it.

US2007173226A1 discloses a converged service control system that includes a protocol interface and a service controller. The protocol interface receives call messages from legacy networks and IMS networks, and converts the call messages to a common protocol. The service controller then processes the call messages in the common protocol to provide service control to the legacy networks and the IMS networks.

### SUMMARY

In view of this, according to an embodiment of the present invention, a method, apparatus and system for charging, and a computer readable storage medium are provided.

According to an embodiment of the present invention, a method for charging is provided. The charging method may include: selecting a first charging system from N connected charging systems for a user according to information of the user; where N is an integer greater than or equal to 2, the information of the user comprises at least one selected from a group consisting of: subscriber number, charging characteristic, international mobile subscriber identification number (IMSI), access point name (APN), location, serving GPRS (General Packet Radio Service) support node (SGSN) and public land mobile network (PLMN); and wherein the N connected charging systems comprise: an online charging system and a converged charging system; or an offline charging system and a converged charging system; or an online charging system, an offline charging system and a converged charging system; transmitting, by the first charging system, first charging information of the user to a billing domain for charging, wherein the first charging information is offline charging information, or online charging information, or a combination of offline charging information and online charging information; and switching to transmitting, by a second charging system, second charging information of the user to the billing domain for charging, in response to the first charging system being unavailable, wherein the second charging information is offline charging information, or online charging information, or a combination of offline charging information and online charging information; wherein the second charging system is one or more charging systems or available charging systems in (N-1) charging systems except for the first charging system in the N connected charging systems.

According to an embodiment of the present invention, a computer readable storage medium storing a computer program is provided, where the computer program, when executed by a processor, causes the processor to perform the steps of any of the above charging methods.

According to an embodiment of the present invention, an apparatus for charging is provided. The charging apparatus may include: a selection module, configured to select a first charging system from N connected charging systems for a user according to information of the user; where N is an integer greater than or equal to 2, the information of the user comprises at least one selected from a group consisting of: subscriber number, charging characteristic, international mobile subscriber identification number (IMSI), access point name (APN), location, serving GPRS (General Packet Radio Service) support node (SGSN) and public land mobile network (PLMN); and wherein the N connected charging systems comprise: an online charging system and a converged charging system; or an offline charging system and a converged charging system; or an online charging system, an offline charging system and a converged charging system; a first charging module, configured to transmit, by the first charging system, first charging information of the user to a billing domain for charging, wherein the first charging information is offline charging information, or online charging information, or a combination of offline charging information and online charging information; and a second charging module, configured to switch to transmitting, by a second charging system, second charging information of a user to a billing domain for charging, in response to the first charging system being unavailable, wherein the second charging information is offline charging information, or online charging information, or a combination of offline charging information and online charging information; wherein the second charging system is one or more charging systems or available charging systems in (N-1) charging systems except for the first charging system in the N connected charging systems.

According to an embodiment of the present invention, a system for charging is provided. The system may include: an apparatus for charging as described above, N charging systems, and a billing domain, where the apparatus for charging is connected to a different charging system through a different interface. A first charging system in the N charging systems is configured to transmit the first charging information of the user to the billing domain. A second charging system in the N charging systems is configured to transmit the second charging information of the user to the billing domain. The billing domain is configured for charging according to the first charging information of the user.

Additional features and advantages of the embodiments of the present invention will be set forth in the description which follows, and in part will be obvious from the description, or may be learned by the practice of the embodiments of the present invention. The objects and other advantages of the embodiments of the present invention can be realized and obtained by the structures pointed out in the description, claims and drawings.

### BRIEF DESCRIPTION OF DRAWINGS

The drawings are provided for a further understanding of the technical solutions of the embodiments of the present invention, and constitute a part of the description. The drawings and the embodiments of the present invention are used to explain the technical solutions of the embodiments of the present invention, and do not constitute a limitation of the technical solutions of the embodiments of the present invention.
Fig. 1 is an architecture diagram of charging systems for 4G network and 5G network in related technologies;
Fig. 2(a) is architecture diagram one of a system for charging according to an embodiment of the present invention;
Fig. 2(b) is architecture diagram two of the system for charging according to an embodiment of the present invention;
Fig. 3 is a flowchart of a method for charging according to an embodiment of the present invention;
Fig. 4 is a flowchart of a method for charging according to another embodiment of the present invention;

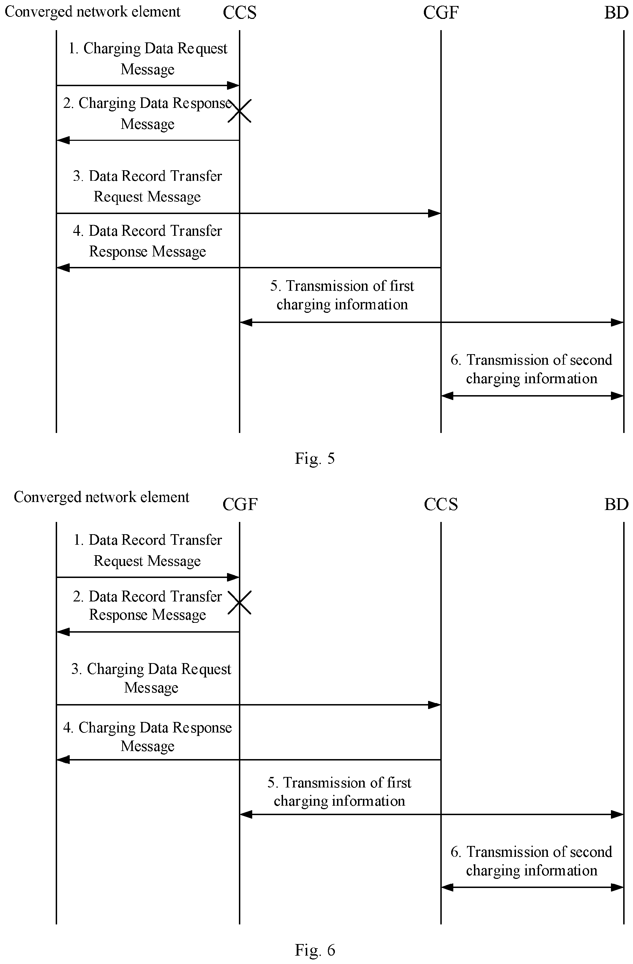

Fig. 5 is an interaction diagram of a method for charging according to embodiment II of the present invention;
Fig. 6 is an interaction diagram of a method for charging according to embodiment III of the present invention;

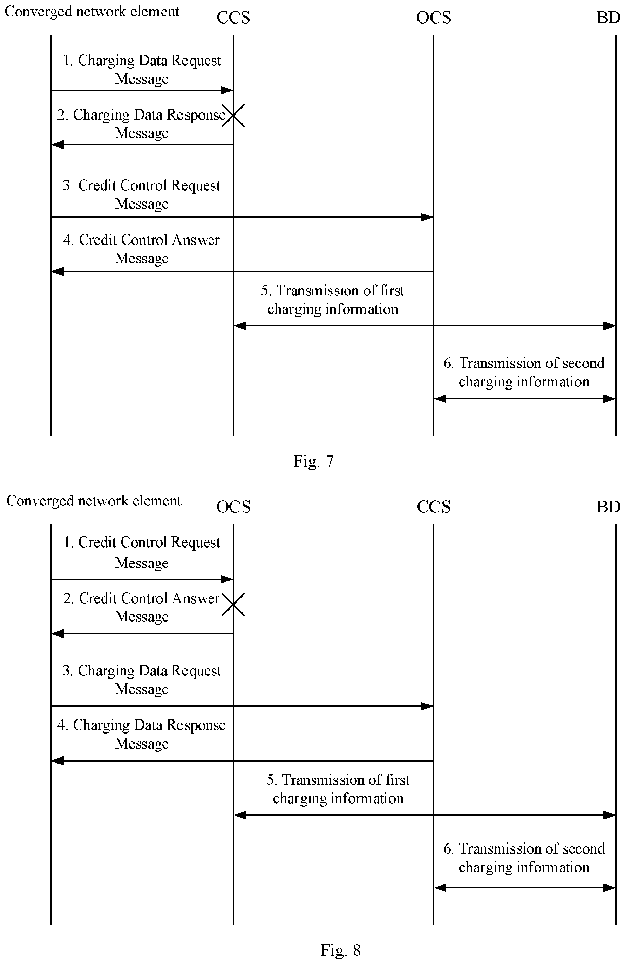

Fig. 7 is an interaction diagram of a method for charging according to embodiment IV of the present invention;
Fig. 8 is an interaction diagram of a method for charging according to embodiment V of the present invention;
Fig. 9 is a structural diagram of an apparatus for charging according to another embodiment of the present invention;
Fig. 10 is a structural diagram of an apparatus for charging according to another embodiment of the present invention;
Fig. 11 is a structural diagram of a system for charging according to another embodiment of the present invention; and
Fig. 12 is a schematic diagram of an apparatus for charging according to another embodiment of the present invention.

### DETAILED DESCRIPTION

Embodiments of the present invention will be described in detail below with reference to the drawings. It is to be noted that, if not in collision, the embodiments and features therein in the embodiments of the present invention may be combined with each other.

Steps shown in the flowchart of the drawings may be performed in a computer system with a set of computer executable instructions. Also, although a logical order is shown in the flowchart, in some cases, the steps shown or described may be performed in a different order than here.

As shown in Fig. 1, in a typical mobile communication system, for example, in a traditional 4G network, there are two charging solutions for PGW, as followings.

### 1. Real-time charging for a prepaid user based on a Ro interface.

As shown in Fig. 1, a billing domain (BD) and an online charging system (OCS) are connected through a Bx interface, and the OCS and network elements (NEs) are connected through the Ro interface.

The NEs include charging trigger function (CTF), which is used to collect information related to chargeable events in the NEs, combine the information into matched charging events, and send the charging events to the OCS through the Ro interface. The charging events contain information related to the chargeable events, that is, representing the network resource usage and the user identity involved. Therefore, the CTF is a mandatory integrated component in all network elements that provide an offline charging function.

The OCS includes online charging function (OCF), account balance management function (ABMF) and rating function (RF).

The OCF includes session-based charging function (SBCF) and event-based charging function (EBCF).

The SBCF is responsible for online charging of network/user sessions, such as voice call, IP CAN bearer, IP CAN session or IMS session.

The EBCF performs event-based online charging (also known as "content charging") in conjunction with any application server or service NE (including SIP application server).

On behalf of the OCF, the RF determines a value of network resource usage (described in the charging events received by the OCF from the network). The OCF provides necessary information from the charging events to the RF, and receives a rating output through a Re interface. The RF can process various examples that can be evaluated, such as rating of data volume, rating of session/connection time and rating of service events.

ABMF is a location of a user's account balance in the OCS.

### 2. Offline charging for a user based on a Ga interface.

As shown in Fig. 1, the BD and charging gateway function (CGF) are connected through a Bx interface, the CGF and charging data function (CDF) are connected through a Ga interface, and the CDF and the NEs are connected through a Rf interface.

The NEs include charging trigger function (CTF), which is used to collect information related to chargeable events in the NEs, combine the information into matched charging events, and send the charging events to the CDF through the Rf interface. The charging events contain information related to the chargeable events, that is, representing the network resource usage and the user identity involved. Therefore, the CTF is a mandatory integrated component in all network elements that provide offline charging function.

The CDF receives charging events from the CTF through the RF interface, and constructs a charging data record (CDR) file by using the information contained in the charging events. The CDR file may be composed of a single charging event or a group of or several charging events. The CDR file generated by the CDF is transmitted to the CGF through the Ga interface.

The CGF acts as a gateway between 3GPP network and the BD. After receiving the CDR file through the Ga interface, the CGF performs relevant processing (such as preprocessing, verification, merging, formatting, error handling, persistent CDR storage, CDR routing and filtering, CDR file management, etc.) for the CDR file, and transmits the processed CDR file to the BD through the Bx interface.

The BD is a part of the operator network, located outside the core network, receives and processes the CDR file from the CGF, and has the functions of providing billing mediation and performing charging or other processing (such as statistics) of final applications, which is only applicable to offline charging system.

In 5G network, a SBI interface (such as Nchf interface in FIG. 1) is added, which supports both online charging and offline charging.

As shown in FIG. 1, the BD and the CCS are connected through the Bx interface, and the CCS and service network functions (NFs) are connected through the Nchf interface.

The NFs includes CTF, and the CTF interacts with the CCS through the Nchf interface. The functions of the CTF are the same as those of the CTF in the offline charging system and the online charging system mentioned above, and will not be repeated here.

The CCS includes charging function (CHF), ABMF, CGF and RF, and the CHF includes OCF and CDF.

In a related charging architecture of 5G network, interaction with a billing domain only through the Nchf interface has inevitable defects, which cannot meet the requirements for charging in 5G network environment. When there is a disconnection of the Nchf interface or an abnormality occurs to the converged charging system (CCS), charging information generated by the service network functions (NFs) can only be temporarily cached locally. Due to the small local storage space, the cached charging information is likely to be lost. Since users' fees are no longer controlled by the CCS in real time, the high bandwidth of 5G may cause losses to operators and may also incur significant Internet costs for the users.

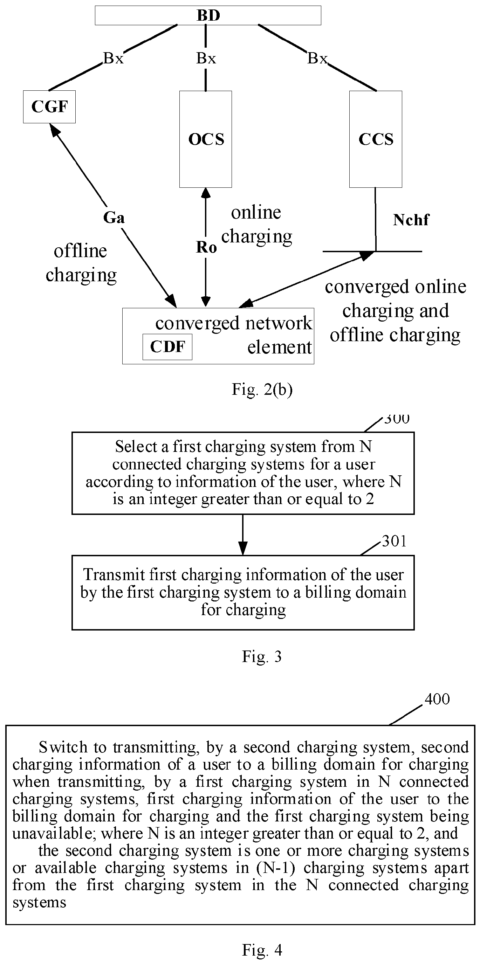

As shown in Fig. 2(a) and Fig. 2(b), in an embodiment of the present invention, the functions of NEs and NFs in FIG. 1 are uniformly implemented by a converged network element, and CDF in an offline charging system may be located outside the converged network element, that is, the CDF is implemented by an independent network element, or may be built in the converged network element.

As shown in Fig. 2(a), when the CDF is located outside the converged network element, that is, the CDF is implemented by an independent network element, the converged network element and the CDF interact with each other through a Rf interface. As shown in Fig. 2(b), when the CDF is built in the converged network element, the converged network element and CGF interact with each other through a Ga interface.

Referring to Fig. 3, according to an embodiment of the present invention, a method for charging is provided, including steps S300 and S301.

At S300, a first charging system is selected from N connected charging systems for a user according to information of the user; where N is an integer greater than or equal to 2.

In an embodiment of the present invention, the information of the user includes any one or more of: subscriber number, charging characteristic, international mobile subscriber identification number (IMSI), access point name (APN), location, serving GPRS support node (SGSN), and public land mobile network (PLMN).

According to an embodiment of the present invention, a plurality of strategies can be adopted to select a first charging system based on the information of the user. For example, after the user successfully accesses the system, a converged charging system can be selected for charging according to the subscriber number, or an online charging system can be selected for charging according to the subscriber number, or an offline charging system can be selected for charging according to the subscriber number, or a converged charging system can be selected for charging according to the charging characteristic. The specific strategies are not intended to limit the protection scope of the embodiments of the present invention.

In an embodiment of the present invention, the N connected charging systems include:
an online charging system and a converged charging system;
or, an offline charging system and a converged charging system;
or, an online charging system, an offline charging system and a converged charging system.

The online charging system includes the OCS shown in Fig. 1.

When CDF is located outside the converged network element, the offline charging system includes CGF and CDF shown in Fig. 1. Alternatively, when CDF is built in the converged network element, the offline charging system includes CGF shown in Fig. 1.

The converged charging system includes CCS shown in Fig. 1.

Of course, the N connected charging systems include not only the charging systems listed above, but also other existing charging systems or new charging systems to be deployed in the future. There is no limitation to the number and form of charging systems in the embodiments of the present invention.

According to an embodiment of the present invention, conventional online and offline charging systems and a 5G converged charging system are combined to make full use of the conventional charging network element entity of an operator, which improves the stability of the charging systems, and makes it possible to switch to other charging systems in time to continue charging when any of the charging systems is unavailable, thus reducing the possibility of causing losses to operators and incurring significant Internet costs for the users.

In an embodiment of the present invention, the first charging system may include one or more of N charging systems.

At S301, the first charging system transmits first charging information of the user to a billing domain for charging.

In an embodiment of the present invention, transmitting, by the first charging system, the first charging information of the user to the billing domain for charging refers to: transmitting the first charging information to the first charging system through a first interface interacting with the first charging system; transmitting, by the first charging system, the first charging information to the billing domain after receiving the first charging information; and charging the user by the charging domain according to the first charging information.

When the first charging system is an offline charging system, the first interface is a Rf interface, then the first charging information is offline charging information, including: service information (time information, traffic information, event information) used by a user, information of the user, charging ID, etc.; alternatively, the first interface is a Ga interface, then the first charging information is offline charging information, including: service information (time information, traffic information and event information) used by a user, information of the user, charging ID, etc.

When the first charging system is an online charging system, the first interface is a Ro interface, then the first charging information is online charging information, including: quota management information (quota request, quota time consumption, quota traffic consumption and quota event consumption), service information (time information, traffic information and event information) used by a user, information of the user, charging ID, etc.

When the first charging system is a converged charging system, the first interface is an Nchf interface, then the first charging information is online charging information and offline charging information, including: quota management information (quota request, quota time consumption, quota traffic consumption and quota event consumption), service information (time information, traffic information and event information) used by a user, information of the user, and charging ID, etc.

When the first charging system is a converged charging system, the first charging information can be reported by transmitting a Charging Data Request message to the first charging system.

When the first charging system is an offline charging system, the first charging information can be reported by transmitting a Data Record Transfer Request message to the first charging system.

When the first charging system is an online charging system, the first charging information can be reported by transmitting a Credit Control Request (CCR) message to the first charging system.

According to an embodiment of the present invention, a system for charging is selected from N charging systems for a user, to transmit charging information to a charging domain, so that the charging method is more flexible.

In another embodiment of the present invention, the method further includes:
switching to transmitting, by a second charging system, second charging information of the user to the billing domain for charging when the first charging system is unavailable;
where the second charging system is one or more charging systems or available charging systems in (N-1) charging systems except for the first charging system in the N connected charging systems.

In an embodiment of the present invention, the first charging system being unavailable means that there is a failure in the communication link with the first charging system or the first charging system is abnormal, that is, the first charging system does not respond or returns an error code after receiving a message.

In an embodiment of the present invention, switching to transmitting, by the second charging system, the second charging information of the user to the billing domain for charging refers to: converting the first charging information into the second charging information and transmitting the second charging information to the second charging system through a second interface interacting with the second charging system; transmitting, by the second charging system, the second charging information to the billing domain after receiving the second charging information; and charging by the billing domain according to the first charging information or the second charging information. That is to say, when the billing domain receives both the first charging information and the second charging information, it is determined that the first charging information and the second charging information belong to the same charging information according to information of the user, charging ID and time information, and one of the two charging information is charged.

In another embodiment of the present invention, before transmitting the second charging information to the second charging system through the second interface interacting with the second charging system, the method further includes:
re-establishing a charging session;
transmitting the second charging information to the second charging system through the second interface interacting with the second charging system includes:
   transmitting the second charging information to the second charging system through the second interface based on the re-established charging session.

In an embodiment of the present invention, when the second charging system is an online charging system or an online charging part of a converged charging system, there is a need to re-establish a charging session. When the second charging system is an offline charging system or an offline charging part of a converged charging system, there is no need to re-establish a charging session.

In an embodiment of the present invention, the first charging system is an online charging system and the second charging system is a converged charging system;
alternatively, the first charging system is a converged charging system and the second charging system is an online charging system;
alternatively, the first charging system is an offline charging system and the second charging system is a converged charging system;
alternatively, the first charging system is a converged charging system and the second charging system is an offline charging system;
alternatively, the first charging system is a converged charging system and the second charging system is an online charging system and an offline charging system;
alternatively, the first charging system is an online charging system and the second charging system is an offline charging system;
alternatively, the first charging system is an offline charging system and the second charging system is an online charging system.

Of course, the first charging system and the second charging system may not be limited to the cases listed above, and other desirable cases are within the protection scope of the present invention.

When the first charging system is an online charging system and the second charging system is a converged charging system, the first interface is a Ro interface and the second interface is an Nchf interface, then the first charging information includes: quota management information (quota request, quota time consumption, quota traffic consumption and quota event consumption), service information (time information, traffic information and event information) used by a user, information of the user, charging ID, etc.; the second charging information includes: abnormal charging flag, quota management information (quota request, quota time consumption, quota traffic consumption and quota event consumption), service information (time information, flow information and event information) used by a user, information of the user, charging ID, etc. That is to say, it may only need to add an abnormal charging flag to convert the first charging information into the second charging information.

When the first charging system is an offline charging system and the second charging system is a converged charging system, the first interface is a Rf interface or a Ga interface and the second interface is an Nchf interface, then the first charging information includes: service information (time information, traffic information, event information) used by a user, information of the user, charging ID, etc.; the charging information of the second interface includes: abnormal charging flag, service information (time information, traffic information and event information) used by a user, information of the user, charging ID, etc. That is to say, it may only need to add an abnormal charging flag to convert the first charging information into the second charging information.

When the first charging system is a converged charging system and the second charging system is an online charging system, the first interface is an Nchf interface and the second interface is a Ro interface, then the first charging information includes: quota management information (quota request, quota time consumption, quota traffic consumption and quota event consumption), service information (time information, traffic information and event information) used by a user, information of the user, charging ID, etc.; the second charging information includes: abnormal charging flag, quota management information (quota request, quota time consumption, quota traffic consumption and quota event consumption), service information (time information, traffic information and event information) used by a user, information of the user, charging ID, etc. That is to say, it may only need to add an abnormal charging flag to convert the first charging information into the second charging information.

When the first charging system is a converged charging system and the second charging system is an offline charging system, the first interface is an Nchf interface and the second interface is a Rf interface or a Ga interface, then the first charging information includes: quota management information (quota request, quota time consumption, quota traffic consumption and quota event consumption), service information (time information, traffic information and event information) used by a user, information of the user, charging ID, etc.; the second charging information includes: abnormal charging flag, service information (time information, traffic information and event information) used by a user, information of the user, charging ID, etc. That is to say, it may only need to add an abnormal charging flag and delete the quota management information of online charging to convert the first charging information into the second charging information.

According to an embodiment of the present invention, when the first charging system is unavailable, it is switched to transmitting, by a second charging system, the second charging information of the user to the billing domain for charging, so that other charging systems are adopted to transmit the charging information of the user to the billing domain for charging when a charging system is unavailable, thus reducing the possibility of causing losses to operators and incurring significant Internet costs for the users.

Referring to Fig. 4, according to another embodiment of the present invention, a method for charging is provided, including step S400.

At 400, it is switched to transmitting, by a second charging system, second charging information of a user to a billing domain for charging when first charging information of the user is transmitted to the billing domain for charging by a first charging system in N connected charging systems but the first charging system is unavailable, where N is an integer greater than or equal to 2.

The second charging system is one or more charging systems or available charging systems in (N-1) charging systems apart from the first charging system in the N connected charging systems.

In an embodiment of the present invention, the N connected charging systems include:
an online charging system and a converged charging system;
alternatively, an offline charging system and a converged charging system;
alternatively, an online charging system, an offline charging system and a converged charging system.

The online charging system includes OCS shown in Fig. 1.

When CDF is located outside the converged network element, the offline charging system includes CGF and CDF shown in Fig. 1. Alternatively, when CDF is built in the converged network element, the offline charging system includes CGF shown in Fig. 1.

The converged charging system includes CCS shown in Fig. 1.

Of course, the N connected charging systems include not only the charging systems listed above, but also other existing charging systems or new charging systems to be deployed in the future. There is no limitation to the number and form of charging systems in the embodiment of the present invention does not limit.

According to an embodiment of the present invention, conventional online and offline charging systems and a 5G converged charging system are combined to make full use of the conventional charging network element entity of operators, which improves the stability of the charging system, and makes it possible to switch to other charging systems in time to continue charging when any of the charging systems is unavailable, thus reducing the possibility of causing losses to the operators and incurring significant Internet costs for the users.

In an embodiment of the present invention, the first charging system may include one or more of N charging systems.

In an embodiment of the present invention, transmitting, by the first charging system, the first charging information of the user to the billing domain for charging refers to: transmitting the first charging information to the first charging system through a first interface interacting with the first charging system; transmitting, by the first charging system, the first charging information to the billing domain after receiving the first charging information; and charging the user by the charging domain according to the first charging information.

For example, when the first charging system is an offline charging system, the first interface is a Rf interface, then the first charging information is offline charging information, including: service information (time information, traffic information, event information) used by a user, information of the user, charging ID, etc.; alternatively, the first interface is a Ga interface, and then the first charging information is offline charging information, including: service information (time information, traffic information and event information) used by a user, information of the user, charging ID, etc.

When the first charging system is an online charging system, the first interface is a Ro interface, then the first charging information is online charging information, including: quota management information (quota request, quota time consumption, quota traffic consumption and quota event consumption), service information (time information, traffic information and event information) used by a user, information of the user, charging ID, etc.

When the first charging system is a converged charging system, the first interface is an Nchf interface, then the first charging information is online charging information and offline charging information, including: quota management information (quota request, quota time consumption, quota traffic consumption and quota event consumption), service information (time information, traffic information and event information) used by a user, information of the user, and charging ID, etc.

When the first charging system is a converged charging system, the first charging information can be reported by transmitting a Charging Data Request message to the first charging system.

When the first charging system is an offline charging system, the first charging information can be reported by transmitting a Data Record Transfer Request message to the first charging system.

When the first charging system is an online charging system, the first charging information can be reported by transmitting a Credit Control Request (CCR) message to the first charging system.

In an embodiment of the present invention, the first charging system being unavailable means that there is a failure in the communication link with the first charging system or the first charging system is abnormal, that is, the first charging system does not respond or returns an error code after receiving the message.

In an embodiment of the present invention, switching to transmitting, by the second charging system, the second charging information of the user to the billing domain for charging refers to: converting the first charging information into the second charging information and transmitting the second charging information to the second charging system through a second interface interacting with the second charging system; transmitting, by the second charging system, the second charging information to the billing domain after receiving the second charging information; and charging by the billing domain according to the first charging information or the second charging information. That is to say, when the billing domain receives both the first charging information and the second charging information, it is determined that the first charging information and the second charging information belong to the same charging information according to information of the user, charging ID and time information, and one of the two charging information is charged.

In another embodiment of the present invention, before transmitting the second charging information to the second charging system through the second interface interacting with the second charging system, the method further includes:
re-establishing a charging session;
transmitting the second charging information to the second charging system through the second interface interacting with the second charging system includes:
   transmitting the second charging information to the second charging system through the second interface based on the re-established charging session.

When the second charging system is an online charging system or an online charging part of a converged charging system, there is a need to re-establish a charging session. When the second charging system is an offline charging system or an offline charging part of a converged charging system, there is no need to re-establish a charging session.

In an embodiment of the present invention, the first charging system is an online charging system and the second charging system is a converged charging system;
alternatively, the first charging system is a converged charging system and the second charging system is an online charging system;
alternatively, the first charging system is an offline charging system and the second charging system is a converged charging system;
alternatively, the first charging system is a converged charging system and the second charging system is an offline charging system;
alternatively, the first charging system is a converged charging system and the second charging system is an online charging system and an offline charging system;
alternatively, the first charging system is an online charging system and the second charging system is an offline charging system;
alternatively, the first charging system is an offline charging system and the second charging system is an online charging system.

Of course, the first charging system and the second charging system may not be limited to the cases listed above, but other desirable cases are within the protection scope of the present invention.

For example, when the first charging system is an online charging system and the second charging system is a converged charging system, the first interface is a Ro interface and the second interface is an Nchf interface, then the first charging information includes: quota management information (quota request, quota time consumption, quota traffic consumption and quota event consumption), service information (time information, traffic information and event information) used by a user, information of the user, charging ID, etc.; the second charging information includes: abnormal charging flag, quota management information (quota request, quota time consumption, quota traffic consumption and quota event consumption), service information (time information, flow information and event information) used by a user, information of the user, charging ID, etc. That is to say, it may only need to add an abnormal charging flag to convert the first charging information into the second charging information.

When the first charging system is an offline charging system and the second charging system is a converged charging system, the first interface is a Rf interface or a Ga interface and the second interface is an Nchf interface, then the first charging information includes: service information (time information, traffic information, event information) used by a user, information of the user, charging ID, etc.; the charging information of the second interface includes: abnormal charging flag, service information (time information, traffic information and event information) used by a user, information of the user, charging ID, etc. That is to say, it may only need to add an abnormal charging flag to convert the first charging information into the second charging information.

When the first charging system is a converged charging system and the second charging system is an online charging system, the first interface is an Nchf interface and the second interface is a Ro interface, then the first charging information includes: quota management information (quota request, quota time consumption, quota traffic consumption and quota event consumption), service information (time information, traffic information and event information) used by a user, information of the user, charging ID, etc.; the second charging information includes: abnormal charging flag, quota management information (quota request, quota time consumption, quota traffic consumption and quota event consumption), service information (time information, traffic information and event information) used by a user, information of the user, charging ID, etc. That is to say, it may only need to add an abnormal charging flag to convert the first charging information into the second charging information.

When the first charging system is a converged charging system and the second charging system is an offline charging system, the first interface is an Nchf interface and the second interface is a Rf interface or a Ga interface, then the first charging information includes: quota management information (quota request, quota time consumption, quota traffic consumption and quota event consumption), service information (time information, traffic information and event information) used by a user, information of the user, charging ID, etc.; the second charging information includes: abnormal charging flag, service information (time information, traffic information and event information) used by a user, information of the user, charging ID, etc. That is to say, it may only need to add an abnormal charging flag and delete the quota management information of online charging to convert the first charging information into the second charging information.

According to an embodiment of the present invention, when the first charging system is unavailable, it is switched to transmitting, by a second charging system, the second charging information of the user to the billing domain for charging, so that other charging systems are adopted to transmit the charging information of the user to the billing domain for charging in response to a charging system being unavailable, thus reducing the possibility of causing losses to operators and incurring significant Internet costs for the users.

The implementation processes of the charging methods of the present invention will be described in detail through several embodiments. The embodiments listed are for convenience of explanation and are not intended to limit the protection scope of the present invention.

### Embodiment I

In this embodiment, the converged network element supports Rf/Ga interface, Ro interface and Nchf interface. According to different strategies of an operator, the offline charging system based on the Rf/Ga interface and/or the online charging system based on the Ro interface and/or the online, offline and converged charging system based on the Nchf interface can be flexibly selected for a user session. Take CDF built in the converged network element as an example to explain.

The implementation process is as follows:
(1) When user A successfully accesses the system, the converged network element selects CHF for online and offline charging according to the subscriber number, that is, the converged charging system is selected for charging.
(2) When user B successfully accesses the system, the converged network element selects OCS for online charging according to the subscriber number, that is, the online charging system is selected for charging.
(3) When user C successfully accesses the system, the converged network element selects CDF/CG (CGF in FIG. 2) for offline charging according to the subscriber number, that is, the offline charging system is selected for charging.
(4) When user D successfully accesses the system, the converged network element selects CHF for online charging according to the charging characteristic, and selects CG for offline charging, and then offline charging and online charging are enabled at the same time.

In addition to the subscriber number, the dimensions of charging may also include charging characteristic, user's IMSI, APN, location, SGSN, PLMN, etc.

### Embodiment II

In this embodiment, the converged network element can select the Ga interface when the Nchf interface is abnormal, and the CG stores the charging information and reports the charging information to the BD. The charging information is converted from the first charging information based on the Nchf interface to the second charging information based on the Rf/Ga interface (i.e. offline charging information).

The conversion method is as follows: the converged network element converts the online charging information and the offline charging information in the first charging information based on the Nchf interface into the second charging information based on the Rf/Ga interface; deletes the quota management information of the online charging information in the first charging information, and retains the charging information in the online charging amount reporting part (i.e. service information (time information, traffic information and event information) used by a user, information of the user, charging ID, etc.) and converts the retained charging information into the second charging information based on the Rf/Ga interface; then, the CGF generates a Data Record file after receiving the second charging information and sends the Data Record file to the BD.

The implementation process is as follows:
(1) When a user successfully accesses the system, a Charging Data Request (CDR) message is sent to CCS, to report the first charging information (including online charging information and offline charging information).
(2) The CCS is abnormal or there is link disconnection, etc., so that the converged network element will not receive the Charging Data Response message from the CCS.
(3) When judging that CG system (i.e., the offline charging system) is normal, the converged network element converts the first charging information of the CCS into the second charging information based on the Ga interface, and sends the second charging information to the CG through a Data Record Transfer Request message.
(4) The CG generates a Data Record for storage, and returns a Data Record Transfer Response message to the converged network element.
(5) The CCS interacts with the BD through the Bx interface and transmits the first charging information to the BD.
(6) The CGF interacts with the BD through the Bx interface and transmits the second charging information to the BD.
(7) The BD filters repeated charging information according to the user's charging ID, user information and time information to complete the deduction of user fees. When the charging ID, user information and time information are the same, it is considered that the first charging information and the second charging information are the same charging information. When one or more of the charging ID, user information and time information are different, it is considered that the first charging information and the second charging information are not the same charging information.

### Embodiment III

In this embodiment, the converged network element can select the Nchf interface when the Ga interface is abnormal, and the CCS stores the charging information and reports the charging information to the BD. The charging information is converted from the first charging information (i.e. offline charging information) based on the Ga interface to the offline charging information in the second charging information based on the Nchf interface.

The conversion method is as follows: the first charging information based on the Rf/Ga interface is converted into the offline charging information in the second charging information based on the Nchf interface, and sent to the CHF. There is no need to re-establish a charging session, but only notify the CHF through a single event charging.

The implementation process is as follows:
(1) When a user successfully accesses the system, a Data Record Transfer Request message is sent to CGF, to report the first charging information.
(2) The CGF is abnormal or there is link disconnection, etc., so that the converged network element does not receive the Data Record Transfer Response message from the CGF.
(3) When judging that the CCS system is normal, the converged network element converts the first charging information based on the CGF into offline charging information in the second charging information based on the Nchf interface, and sends the second charging information to the CCS through a Charging Data Request message.
(4) The CCS generates a Data Record for storage, and returns a Charging Data Response message.
(5) The CGF interacts with the BD through the Bx interface and transmits the first charging information to the BD.
(6) The CCS interacts with the BD through the Bx interface and transmits the second charging information to the BD.
(7) The BD filters repeated charging information according to the user's charging ID, user information and time information to complete the deduction of user fees. When the charging ID, user information and time information are the same, it is considered that the first charging information and the second charging information are the same charging information. When one or more of the charging ID, user information and time information are different, it is considered that the first charging information and the second charging information are not the same charging information.

### Embodiment IV

In this embodiment, the converged network element can select the Ro interface when the Nchf interface is abnormal, and the OCS stores the charging information and reports the charging information to the BD. The charging information is converted from the first charging information based on the Nchf interface to the second charging information based on the Ro interface.

The conversion method is as follows: 5G CS establishes a charging session based on the Ro interface, converts the online charging information and the offline charging information in the first charging information based on the Nchf interface into the second charging information based on the Ro interface, that is, the online charging information in the first charging information is retained in the second charging information, and the offline charging information in the first charging information is converted into the second charging information based on the Ro interface; and then reports the second charging information to the OCS. The OCS performs quota management for the online charging information in the second charging information, allocates quotas to allow users to continue to use, and directly deducts users' fees for the offline charging information, or generates a Data Record for storage.

The implementation process is as follows:
(1) When a user successfully accesses the system, the converged network element sends a Charging Data Request message to CCS to report the first charging information (including online charging information and offline charging information).
(2) The CCS is abnormal or there is link disconnection, etc., so that the converged network element does not receive the Charging Data Response message from the CCS.
(3) When judging that OCS is normal, the converged network element converts the first charging information of the CCS into the second offline charging information based on the Ro interface, and sends the second charging information to the OCS through CCR message.
(4) The OCS generates a Data Record for storage, and returns a Credit Control Answer (CCA) message to the converged network element.
(5) The CCS interacts with the BD through the Bx interface and transmits the first charging information to the BD.
(6) The OCS interacts with BD through the Bx interface and transmits the second charging information to the BD.
(7) The BD filters repeated charging information according to the user's charging ID, user information and time information to complete the deduction of user fees. When the charging ID, user information and time information are the same, it is considered that the first charging information and the second charging information are the same charging information. When one or more of the charging ID, user information and time information are different, it is considered that the first charging information and the second charging information are not the same charging information.

### Embodiment V

In this embodiment, the converged network element can select the Nchf interface when the Ro interface is abnormal, and the CCS stores the charging information and reports the charging information to the BD. The charging information is converted from the first charging information based on the Ro interface to the second charging information based on the Nchf interface.

The conversion method is as follows: the integration network element establishes a charging session based on the Nchf interface, converts the first charging information based on the Ro interface into the online charging information in the second charging information based on the Nchf interface, and sends the second charging information to the CCS. After receiving the second charging information, the CCS can perform quota manage for the online charging information, and allocate quotas to allow users to continue to use services.

The implementation process is as follows:
(1) When a user successfully accesses the system, a CCR message is sent to OCS, to report the first charging information.
(2) The OCS is abnormal or there is link disconnection, etc., so that the converged network element does not receive the CCA message from the OCS.
(3) When judging that the CCS system is normal, the converged network element converts the first charging information of the OCS into the second charging information based on the Nchf interface, and sends the second charging information to the CCS through a Charging Data Request message.
(4) The CCS generates a Data Record for storage, and returns a Charging Data Response message.
(5) The OCS interacts with the BD through the Bx interface and transmits the first charging information to the BD.
(6) The CCS interacts with the BD through the Bx interface and transmits the second charging information to the BD.
(7) The BD filters repeated charging information according to the user's charging ID, user information and time information to complete the deduction of user fees. When the charging ID, user information and time information are the same, it is considered that the first charging information and the second charging information are the same charging information. When one or more of the charging ID, user information and time information are different, it is considered that the first charging information and the second charging information are not the same charging information.

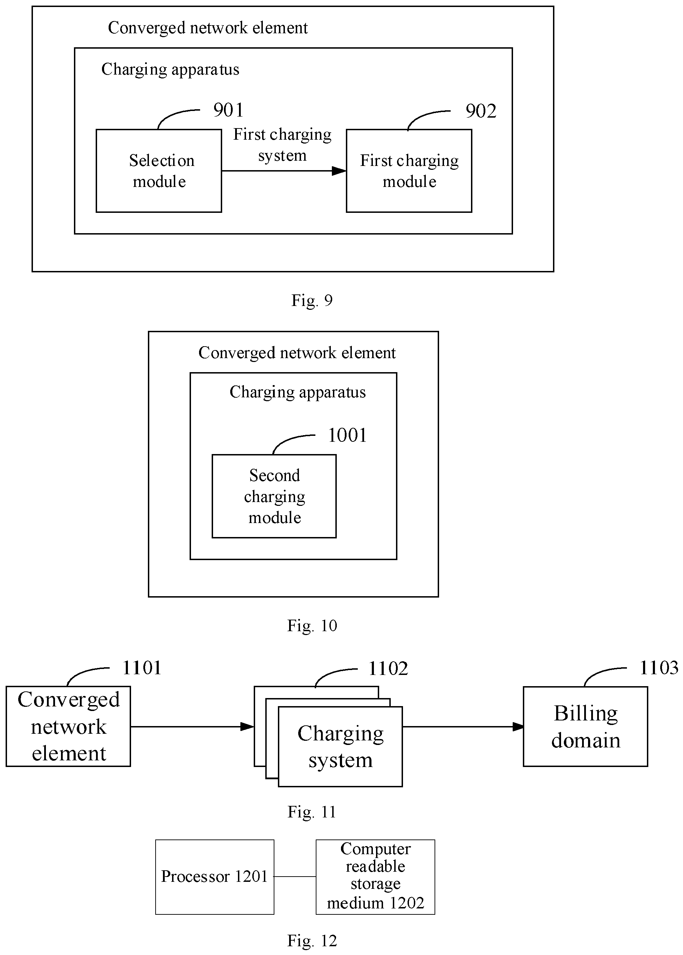

Referring to Fig. 12, according to another embodiment of the present invention, an apparatus for charging is provided, including a processor 1201 and a computer readable storage medium 1202, where the computer readable storage medium 1202 stores an instruction which, when executed by the processor 1201, causes the processor 1201 to perform any of the above methods.

According to another embodiment of the present invention, a computer readable storage medium storing a computer program is provided, where the computer program, when executed by a processor, causes the processor to perform the steps of any of the above methods.

Referring to Fig. 9, according to another embodiment of the present invention, an apparatus for charging is provided, which is arranged in a converged network element. The charging apparatus includes:
a selection module 901, configured to select a first charging system from N connected charging systems for a user according to information of the user; where N is an integer greater than or equal to 2; and
a first charging module 902, configured to transmit, by the first charging system, first charging information of the user to a billing domain for charging.

In an embodiment of the present invention, the first charging module 902 is further configured to:
switch to transmitting, by a second charging system, second charging information of the user to the billing domain for charging when the first charging system is unavailable;
where the second charging system is one or more charging systems or available charging systems in (N-1) charging systems apart from the first charging system in the N connected charging systems.

In an embodiment of the present invention, the first charging module 901 is configured to transmit, by the first charging system, the first charging information of the user to the billing domain for charging in the following manner:
transmitting the first charging information to the first charging system through a first interface interacting with the first charging system.

The first charging module 901 is configured to switch to transmitting, by the second charging system, the second charging information of the user to the billing domain for charging in the following manners:
converting the first charging information into the second charging information, and transmitting the second charging information to the second charging system through a second interface interacting with the second charging system.

In an embodiment of the present invention, the first charging module 901 is further configured to:
re-establish a charging session; and transmit the second charging information to the second charging system through the second interface based on the re-established charging session.

In an embodiment of the present invention:
the first charging system is an online charging system and the second charging system is a converged charging system;
alternatively, the first charging system is a converged charging system and the second charging system is an online charging system;
alternatively, the first charging system is an offline charging system and the second charging system is a converged charging system;
alternatively, the first charging system is a converged charging system and the second charging system is an offline charging system;
alternatively, the first charging system is a converged charging system and the second charging system is an online charging system and an offline charging system;
alternatively, the first charging system is an online charging system and the second charging system is an offline charging system;
alternatively, the first charging system is an offline charging system and the second charging system is an online charging system.

In an embodiment of the present invention, the information of the user includes any one or more of: subscriber number, charging characteristic, international mobile subscriber identification number (IMSI), access point name (APN), location, serving GPRS support node (SGSN) and public land mobile network (PLMN).

In an embodiment of the present invention, the N connected charging systems include:
an online charging system and a converged charging system;
alternatively, an offline charging system and a converged charging system;
alternatively, an online charging system, an offline charging system and a converged charging system.

Referring to Fig. 10, according to another embodiment of the present invention, an apparatus for charging is provided, which is arranged in a converged network element. The charging apparatus includes:
a second charging module 1001, configured to switch to transmitting, by a second charging system, second charging information of a user to a billing domain for charging when transmitting, by a first charging system in N connected charging systems, first charging information of the user to the billing domain for charging but the first charging system being unavailable, where N is an integer greater than or equal to 2, and
the second charging system is one or more charging systems in (N-1) charging systems except for the first charging system in the N connected charging systems.

In an embodiment of the present invention, the second charging module 1001 is configured to transmit, by the first charging system, the first charging information of the user to the billing domain for charging in the following manner:
transmitting the first charging information to the first charging system through a first interface interacting with the first charging system.

The second charging module 1001 is configured to switch to transmitting, by the second charging system, the second charging information of the user to the billing domain for charging in the following manners:
converting the first charging information into the second charging information, and transmitting the second charging information to the second charging system through a second interface interacting with the second charging system.

In an embodiment of the present invention, the second charging module 1001 is further configured to:
re-establish a charging session; and transmit the second charging information to the second charging system through the second interface based on the re-established charging session.

In an embodiment of the present invention:
the first charging system is an online charging system and the second charging system is a converged charging system;
alternatively, the first charging system is a converged charging system and the second charging system is an online charging system;
alternatively, the first charging system is an offline charging system and the second charging system is a converged charging system;
alternatively, the first charging system is a converged charging system and the second charging system is an offline charging system;
alternatively, the first charging system is a converged charging system and the second charging system is an online charging system and an offline charging system;
alternatively, the first charging system is an online charging system and the second charging system is an offline charging system;
alternatively, the first charging system is an offline charging system and the second charging system is an online charging system.

In an embodiment of the present invention, the N connected charging systems include:
an online charging system and a converged charging system;
alternatively, an offline charging system and a converged charging system;
alternatively, an online charging system, an offline charging system and a converged charging system.

Referring to Fig. 11, according to another embodiment of the present invention, a system for charging is provided, including a converged network element 1101, N charging systems 1102, and a billing domain 1103, where N is an integer greater than or equal to 2, and the converged network element is connected to a different charging system through a different interface.

The converged network element 1101 is configured to select a first charging system from the N connected charging systems for a user according to information of the user, transmit first charging information of the user to the first charging system through a first interface interacting with the first charging system, and charge the user through the first charging system.

The first charging system in the N charging systems 1102 is configured to transmit the first charging information of the user to the billing domain.

The billing domain 1103 is configured for charging according to the first charging information of the user.

In an embodiment of the present invention, the converged network element 1101 is further configured to:
switch to transmitting, by a second charging system, second charging information of the user to the billing domain for charging when the first charging system is unavailable;
where the second charging system is one or more charging systems or available charging systems in (N-1) charging systems except for the first charging system in the N connected charging systems.

In an embodiment of the present invention, the converged network element 1101 is configured to transmit, by the first charging system, the first charging information of the user to the billing domain for charging in the following manner:
transmitting the first charging information to the first charging system through a first interface interacting with the first charging system.

The converged network element 1101 is configured to switch to transmitting, by the second charging system, the second charging information of the user to the billing domain for charging in the following manners:
converting the first charging information into the second charging information, and transmitting the second charging information to the second charging system through a second interface interacting with the second charging system.

In an embodiment of the present invention, the converged network element 1101 is further configured to:
re-establish a charging session; and transmit the second charging information to the second charging system through the second interface based on the re-established charging session.

In an embodiment of the present invention:
the first charging system is an online charging system and the second charging system is a converged charging system;
alternatively, the first charging system is a converged charging system and the second charging system is an online charging system;
alternatively, the first charging system is an offline charging system and the second charging system is a converged charging system;
alternatively, the first charging system is a converged charging system and the second charging system is an offline charging system;
alternatively, the first charging system is a converged charging system and the second charging system is an online charging system and an offline charging system;
alternatively, the first charging system is an online charging system and the second charging system is an offline charging system;
alternatively, the first charging system is an offline charging system and the second charging system is an online charging system.

In an embodiment of the present invention, the information of the user includes any one or more of: subscriber number, charging characteristic, international mobile subscriber identification number (IMSI), access point name (APN), location, serving GPRS support node (SGSN) and public land mobile network (PLMN).

In an embodiment of the present invention, the N connected charging systems include:
an online charging system and a converged charging system;
alternatively, an offline charging system and a converged charging system;
alternatively, an online charging system, an offline charging system and a converged charging system.

Referring to Fig. 11, according to another embodiment of the present invention, a system for charging is provided, including a converged network element 1101, N charging systems 1102, and a billing domain 1103, where N is an integer greater than or equal to 2, and the converged network element is connected to a different charging system through a different interface.

The converged network element 1101 is configured to switch to transmitting, by a second charging system, second charging information of a user to a billing domain for charging when transmitting, by a first charging system in N connected charging systems, first charging information of the user to the billing domain for charging and the first charging system being unavailable; where the second charging system is one or more charging systems or available charging systems in (N-1) charging systems apart from the first charging system in the N connected charging systems.

The first charging system in the N charging systems 1102 is configured to transmit the first charging information of the user to the billing domain.

The second charging system is configured to transmit the second charging information of the user to the billing domain.

The billing domain 1103 is configured for charging according to the first charging information or the second charging information of the user.

In an embodiment of the present invention, the converged network element 1101 is configured to transmit, by the first charging system, the first charging information of the user to the billing domain for charging in the following manner:
transmitting the first charging information to the first charging system through a first interface interacting with the first charging system.

The converged network element 1101 is configured to switch to transmit, by the second charging system, the second charging information of the user to the billing domain for charging in the following manners:
converting the first charging information into the second charging information, and transmitting the second charging information to the second charging system through a second interface interacting with the second charging system.

In an embodiment of the present invention, the converged network element 1101 is further configured to:
re-establish a charging session; and transmit the second charging information to the second charging system through the second interface based on the re-established charging session.

In an embodiment of the present invention:
the first charging system is an online charging system and the second charging system is a converged charging system;
alternatively, the first charging system is a converged charging system and the second charging system is an online charging system;
alternatively, the first charging system is an offline charging system and the second charging system is a converged charging system;
alternatively, the first charging system is a converged charging system and the second charging system is an offline charging system;
alternatively, the first charging system is a converged charging system and the second charging system is an online charging system and an offline charging system;
alternatively, the first charging system is an online charging system and the second charging system is an offline charging system;
alternatively, the first charging system is an offline charging system and the second charging system is an online charging system.

In an embodiment of the present invention, the N connected charging systems include:
an online charging system and a converged charging system;
alternatively, an offline charging system and a converged charging system;
alternatively, an online charging system, an offline charging system and a converged charging system.

The implementation process of the above apparatus and system is the same as the implementation process of the charging method in the previous embodiments, and will not be repeated here.

An embodiment of the present invention includes: selecting a first charging system from N connected charging systems for a user according to information of the user; where N is an integer greater than or equal to 2; and transmitting, by the first charging system, first charging information of the user to a billing domain for charging. According to the embodiment of the present invention, a charging system can be selected from N charging systems for the user, and the charging method is more flexible.

Another embodiment of the present invention includes: switching to transmitting, by a second charging system, second charging information of a user to a billing domain for charging, when a first charging system being unavailable while transmitting, by the first charging system in N connected charging systems, first charging information of the user to the billing domain for charging; where N is an integer greater than or equal to 2, and the second charging system is one or more charging systems or available charging systems in (N-1) charging systems apart from the first charging system in the N connected charging systems. According to the embodiment of the present invention, when the first charging system is unavailable, it is switched to transmitting, by a second charging system, the second charging information of the user to the billing domain for charging, so that other charging systems can be adopted to transmit the charging information of the user to the billing domain for charging when a charging system is unavailable, thus reducing the possibility of causing losses to operators and making users owe huge Internet access fees.

According to an embodiment of the present invention, a method for charging, an apparatus for charging and a system for charging are provided, which can make the charging method more flexible, and other charging systems can be adopted to transmit the charging information of the user to the billing domain for charging when a charging system is unavailable, thus reducing the possibility of causing losses to operators and incurring significant Internet costs for the users.

It can be understood by those having ordinary skill in the art that all or some of the steps in the methods, systems, and functional modules/units in the apparatus disclosed above may be implemented as software, firmware, hardware and appropriate combinations thereof. In the hardware implementation, the division between functional modules/units mentioned in the above description does not necessarily correspond to the division of physical components. For example, a physical component may have multiple functions, or a function or a step may be cooperatively performed by several physical components. Some or all of the components may be implemented as software executed by a processor, such as a digital signal processor or a microprocessor, or as hardware, or as integrated circuit, such as an application specific integrated circuit. Such software can be distributed on a computer readable medium, which may include a computer storage medium (or non-temporary medium) and a communication medium (or temporary medium). As well known to those having ordinary skill in the art, the term computer storage medium includes volatile and nonvolatile, removable and non-removable medium implemented in any method or technology for storing information, such as computer readable instructions, data structures, program modules or other data. The computer storage medium includes but is not limited to RAM, ROM, EEPROM, flash memory or other memory technologies, CD-ROM, digital versatile disk (DVD) or other optical disk storage, magnetic cartridge, magnetic tapes, magnetic disk storage or other magnetic storage devices, or any other medium that can be used to store desired information and can be accessed by a computer. In addition, it is well known to those having ordinary skill in the art that the communication medium usually contains computer readable instructions, data structures, program modules or other data in a modulated data signal such as a carrier wave or other transmission mechanism, and may include any information delivery medium.

Although the implementation modes disclosed in the embodiments of the present invention are as above, the contents described are the implementation modes adopted for the convenience of understanding the embodiments of the present invention, and are not intended to limit the embodiments of the present invention. Without departing from the scope disclosed in the embodiments of the present invention, any person having ordinary skill in the art to which the embodiments of the present invention belong may make any modifications and changes in the implementation form and details, but the scope of patent protection of the embodiments of the present invention shall still be subject to the scope defined by the appended claims.

## Claims

1. A method for charging, **characterized in that**, the method comprises:
selecting a first charging system from N connected charging systems for a user according to information of the user, wherein N is an integer greater than or equal to 2 (300), the information of the user comprises at least one selected from a group consisting of: subscriber number, charging characteristic, international mobile subscriber identification number, IMSI, access point name, APN, location, Serving General packet radio service Support Node, SGSN and public land mobile network, PLMN; and wherein the N connected charging systems comprise: an online charging system and a converged charging system; or an offline charging system and a converged charging system; or an online charging system, an offline charging system and a converged charging system;
transmitting, by the first charging system, first charging information of the user to a billing domain for charging (301), wherein the first charging information is offline charging information, or online charging information, or a combination of offline charging information and online charging information; and
switching to transmitting, by a second charging system, second charging information of the user to the billing domain for charging, in response to the first charging system being unavailable, wherein the second charging information is offline charging information, or online charging information, or a combination of offline charging information and online charging information;
wherein the second charging system is one or more charging systems or available charging systems in (N-1) charging systems except for the first charging system in the N connected charging systems.

2. The method of claim 1, wherein,
transmitting, by the first charging system, the first charging information of the user to the billing domain for charging comprises:
transmitting the first charging information to the first charging system through a first interface interacting with the first charging system; and
switching to transmitting, by the second charging system, the second charging information of the user to the billing domain for charging comprises:
converting the first charging information into the second charging information, and transmitting the second charging information to the second charging system through a second interface interacting with the second charging system.

3. The method of claim 2, wherein before transmitting the second charging information to the second charging system through the second interface interacting with the second charging system, the method further comprises:
re-establishing a charging session; and
transmitting the second charging information to the second charging system through the second interface interacting with the second charging system comprises:
transmitting the second charging information to the second charging system through the second interface based on the re-established charging session.

4. The method of claim 1, wherein,
the first charging system is an online charging system and the second charging system is a converged charging system; or
the first charging system is a converged charging system and the second charging system is an online charging system; or
the first charging system is an offline charging system and the second charging system is a converged charging system; or
the first charging system is a converged charging system and the second charging system is an offline charging system; or
the first charging system is a converged charging system and the second charging system is an online charging system and an offline charging system; or
the first charging system is an online charging system and the second charging system is an offline charging system; or
the first charging system is an offline charging system and the second charging system is an online charging system.

5. A computer readable storage medium storing a computer program, wherein the computer program, when executed by a processor, causes the processor to perform the method for charging of one of claims 1 to 4.

6. An apparatus for charging, comprising:
a selection module (901), configured to select a first charging system from N connected charging systems for a user according to information of the user, wherein N is an integer greater than or equal to 2, the information of the user comprises at least one selected from a group consisting of: subscriber number, charging characteristic, international mobile subscriber identification number, IMSI, access point name, APN, location, Serving General packet radio service Support Node, SGSN and public land mobile network, PLMN; and wherein the N connected charging systems comprise: an online charging system and a converged charging system; or an offline charging system and a converged charging system; or an online charging system, an offline charging system and a converged charging system;
a first charging module (902), configured to transmit, by the first charging system, first charging information of the user to a billing domain for charging, wherein the first charging information is offline charging information, or online charging information, or a combination of offline charging information and online charging information;
a second charging module (1001), configured to switch to transmitting, by a second charging system, second charging information of a user to a billing domain for charging, in response to the first charging system being unavailable, wherein the second charging information is offline charging information, or online charging information, or a combination of offline charging information and online charging information;
wherein the second charging system is one or more charging systems or available charging systems in (N-1) charging systems except for the first charging system in the N connected charging systems.

7. A system for charging, comprising the apparatus for charging of claim 6, N charging systems (1102), and a billing domain (1103), wherein the apparatus for charging is connected to a respective charging system through a respective interface; and
a first charging system in the N charging systems (1102) is configured to transmit the first charging information of the user to the billing domain (1103);
a second charging system in the N charging systems (1102) is configured to transmit the second charging information of the user to the billing domain (1103); and
the billing domain (1103) is configured to charge according to the first charging information of the user.

## Patentansprüche

1. Verfahren zum Abrechnen, **dadurch gekennzeichnet, dass** das Verfahren Folgendes umfasst:
Auswählen eines ersten Abrechnungssystems aus N verbundenen Abrechnungssystemen für einen Benutzer gemäß Informationen des Benutzers, wobei N eine ganze Zahl größer als oder gleich 2 ist (300), wobei die Informationen des Benutzers zumindest eines ausgewählt aus einer Gruppe umfassen, bestehend aus: Teilnehmernummer, Abrechnungscharakteristik, internationaler Mobilfunkteilnehmer-Identifikationsnummer, IMSI, Zugangspunktname, APN, Standort, Unterstützungsknoten für allgemeinen Paketfunkdienst, SGSN und öffentlichem Landmobilfunknetz, PLMN; und wobei die N verbundenen Abrechnungssysteme Folgendes umfassen: ein Online-Abrechnungssystem und ein konvergentes Abrechnungssystem; oder ein Offline-Abrechnungssystem und ein konvergentes Abrechnungssystem; oder ein Online-Abrechnungssystem, ein Offline-Abrechnungssystem und ein konvergentes Abrechnungssystem;
Übertragen, durch das erste Abrechnungssystem, von ersten Abrechnungsinformationen des Benutzers an eine Rechnungsdomäne zum Abrechnen (301), wobei die ersten Abrechnungsinformationen Offline-Abrechnungsinformationen oder Online-Abrechnungsinformationen oder eine Kombination aus Offline-Abrechnungsinformationen und Online-Abrechnungsinformationen sind; und
Umschalten auf das Übertragen, durch ein zweites Abrechnungssystem, von zweiten Abrechnungsinformationen des Benutzers an die Rechnungsdomäne zum Abrechnen als Reaktion darauf, dass das erste Abrechnungssystem nicht verfügbar ist, wobei die zweiten Abrechnungsinformationen Offline-Abrechnungsinformationen oder Online-Abrechnungsinformationen oder eine Kombination aus Offline-Abrechnungsinformationen und Online-Abrechnungsinformationen sind;
wobei das zweite Abrechnungssystem ein oder mehrere Abrechnungssysteme oder verfügbare Abrechnungssysteme in (N-1) Abrechnungssystemen mit Ausnahme des ersten Abrechnungssystems in den N verbundenen Abrechnungssystemen ist.

2. Verfahren nach Anspruch 1, wobei
das Übertragen, durch das erste Abrechnungssystem, der ersten Abrechnungsinformationen des Benutzers an die Rechnungsdomäne zum Abrechnen Folgendes umfasst:
Übertragen der ersten Abrechnungsinformationen an das erste Abrechnungssystem durch eine erste Schnittstelle, die mit dem ersten Abrechnungssystem interagiert; und
das Umschalten auf das Übertragen, durch das zweite Abrechnungssystem, der zweiten Abrechnungsinformationen des Benutzers an die Rechnungsdomäne zum Abrechnen Folgendes umfasst:
Umwandeln der ersten Abrechnungsinformationen in die zweiten Abrechnungsinformationen und Übertragen der zweiten Abrechnungsinformationen an das zweite Abrechnungssystem durch eine zweite Schnittstelle, die mit dem zweiten Abrechnungssystem interagiert.

3. Verfahren nach Anspruch 2, wobei vor dem Übertragen der zweiten Abrechnungsinformationen an das zweite Abrechnungssystem durch die zweite Schnittstelle, die mit dem zweiten Abrechnungssystem interagiert, das Verfahren ferner Folgendes umfasst:
Wiederherstellen einer Abrechnungssitzung; und
das Übertragen der zweiten Abrechnungsinformationen an das zweite Abrechnungssystem durch die zweite Schnittstelle, die mit dem zweiten Abrechnungssystem interagiert, Folgendes umfasst:
Übertragen der zweiten Abrechnungsinformationen an das zweite Abrechnungssystem durch die zweite Schnittstelle basierend auf der wiederhergestellten Abrechnungssitzung.

4. Verfahren nach Anspruch 1, wobei
das erste Abrechnungssystem ein Online-Abrechnungssystem ist und das zweite Abrechnungssystem ein konvergentes Abrechnungssystem ist; oder
das erste Abrechnungssystem ein konvergentes Abrechnungssystem ist und das zweite Abrechnungssystem ein Online-Abrechnungssystem ist; oder
das erste Abrechnungssystem ein Offline-Abrechnungssystem ist und das zweite Abrechnungssystem ein konvergentes Abrechnungssystem ist; oder
das erste Abrechnungssystem ein konvergentes Abrechnungssystem ist und das zweite Abrechnungssystem ein Offline-Abrechnungssystem ist; oder
das erste Abrechnungssystem ein konvergentes Online-Abrechnungssystem ist und das zweite Abrechnungssystem ein Online-Abrechnungssystem und ein Offline-Abrechnungssystem ist; oder
das erste Abrechnungssystem ein Online-Abrechnungssystem ist und das zweite Abrechnungssystem ein Online-Abrechnungssystem ist; oder
das erste Abrechnungssystem ein Offline-Abrechnungssystem ist und das zweite Abrechnungssystem ein Online-Abrechnungssystem ist.

5. Computerlesbares Speichermedium, das ein Computerprogramm speichert, wobei das Computerprogramm, wenn es durch einen Prozessor ausgeführt wird, den Prozessor dazu veranlasst, das Verfahren zum Abrechnen nach einem der Ansprüche 1 bis 4 durchzuführen.

6. Vorrichtung zum Abrechnen, umfassend:
ein Auswahlmodul (901), das konfiguriert ist, um ein erstes Abrechnungssystem aus N verbundenen Abrechnungssystemen für einen Benutzer gemäß Informationen des Benutzers auszuwählen, wobei N eine ganze Zahl größer als oder gleich 2 ist, wobei die Informationen des Benutzers zumindest eines ausgewählt aus einer Gruppe umfassen, bestehend aus: Teilnehmernummer, Abrechnungscharakteristik, internationaler Mobilfunkteilnehmer-Identifikationsnummer, IMSI, Zugangspunktname, APN, Standort, Unterstützungsknoten für allgemeinen Paketfunkdienst, SGSN und öffentlichem Landmobilfunknetz, PLMN; und wobei die N verbundenen Abrechnungssysteme Folgendes umfassen: ein Online-Abrechnungssystem und ein konvergentes Abrechnungssystem; oder ein Offline-Abrechnungssystem und ein konvergentes Abrechnungssystem; oder ein Online-Abrechnungssystem, ein Offline-Abrechnungssystem und ein konvergentes Abrechnungssystem;
ein erstes Abrechnungsmodul (902), das konfiguriert ist, um durch das erste Abrechnungssystem erste Abrechnungsinformationen des Benutzers an eine Rechnungsdomäne zum Abrechnen zu übertragen, wobei die ersten Abrechnungsinformationen Offline-Abrechnungsinformationen oder Online-Abrechnungsinformationen oder eine Kombination aus Offline-Abrechnungsinformationen und Online-Abrechnungsinformationen sind; und
ein zweites Abrechnungsmodul (1001), das konfiguriert ist, um auf das Übertragen, durch ein zweites Abrechnungssystem, von zweiten Abrechnungsinformationen eines Benutzers an eine Rechnungsdomäne zum Abrechnen als Reaktion darauf umzuschalten, dass das erste Abrechnungssystem nicht verfügbar ist, wobei die zweiten Abrechnungsinformationen Offline-Abrechnungsinformationen oder Online-Abrechnungsinformationen oder eine Kombination aus Offline-Abrechnungsinformationen und Online-Abrechnungsinformationen sind;
wobei das zweite Abrechnungssystem ein oder mehrere Abrechnungssysteme oder verfügbare Abrechnungssysteme in (N-1) Abrechnungssystemen mit Ausnahme des ersten Abrechnungssystems in den N verbundenen Abrechnungssystemen ist.

7. System zum Abrechnen, umfassend die Vorrichtung zum Abrechnen nach Anspruch 6, N Abrechnungssysteme (1102) und eine Rechnungsdomäne (1103), wobei die Vorrichtung zum Abrechnen mit einem jeweiligen Abrechnungssystem durch eine jeweilige Schnittstelle verbunden ist; und
ein erstes Abrechnungssystem in den N Abrechnungssystemen (1102) konfiguriert ist, um die ersten Abrechnungsinformationen des Benutzers an die Rechnungsdomäne (1103) zu übertragen,
ein zweites Abrechnungssystem in den N Abrechnungssystemen (1102) konfiguriert ist, um die zweiten Abrechnungsinformationen des Benutzers an die Rechnungsdomäne (1103) zu übertragen; und
die Rechnungsdomäne (1103) konfiguriert ist, um gemäß den ersten Abrechnungsinformationen des Benutzers abzurechnen.

## Revendications

1. Procédé de facturation, **caractérisé en ce que**, le procédé comprend :
la sélection d'un premier système de facturation parmi N systèmes de facturation connectés pour un utilisateur en fonction d'informations de l'utilisateur, dans lequel N est un nombre entier supérieur ou égal à 2 (300), les informations de l'utilisateur comprennent au moins un élément sélectionné dans un groupe constitué de : numéro d'abonné, caractéristique de facturation, numéro d'identification d'abonné mobile international, IMSI, nom du point d'accès, APN, localisation,
noeud de support de service général de radiocommunication par paquets, SGSN, et réseau mobile terrestre public, PLMN ; et dans lequel les N systèmes de facturation connectés comprennent : un système de facturation en ligne et un système de facturation convergé ; ou un système de facturation hors ligne et un système de facturation convergé ; ou un système de facturation en ligne, un système de facturation hors ligne et un système de facturation convergé ;
la transmission, par le premier système de facturation, des premières informations de facturation de l'utilisateur à un domaine de tarification pour la facturation (301), dans lequel les premières informations de facturation sont des informations de facturation hors ligne, ou des informations de facturation en ligne, ou une combinaison d'informations de facturation hors ligne et d'informations de facturation en ligne ; et
la commutation vers une transmission, par un second système de facturation, de secondes informations de facturation de l'utilisateur au domaine de tarification pour la facturation, en réponse au fait que le premier système de facturation soit indisponible, dans lequel les secondes informations de facturation sont des informations de facturation hors ligne, ou des informations de facturation en ligne, ou une combinaison d'informations de facturation hors ligne et d'informations de facturation en ligne ;
dans lequel le second système de facturation est un ou plusieurs systèmes de facturation ou des systèmes de facturation disponibles dans (N-1) systèmes de facturation, à l'exception du premier système de facturation dans les N systèmes de facturation connectés.

2. Procédé selon la revendication 1, dans lequel
la transmission, par le premier système de facturation, des premières informations de facturation de l'utilisateur au domaine de tarification pour la facturation comprend :
la transmission des premières informations de facturation au premier système de facturation via une première interface interagissant avec le premier système de facturation ; et
la commutation vers une transmission, par le second système de facturation, des secondes informations de facturation de l'utilisateur au domaine de tarification pour la facturation comprend :
la conversion des premières informations de facturation en secondes informations de facturation, et la transmission des secondes informations de facturation au second système de facturation via une seconde interface interagissant avec le second système de facturation.

3. Procédé selon la revendication 2, dans lequel avant la transmission des secondes informations de facturation au second système de facturation via la seconde interface interagissant avec le second système de facturation, le procédé comprend en outre :
le rétablissement d'une session de facturation ; et
la transmission des secondes informations de facturation au second système de facturation via la seconde interface interagissant avec le second système de facturation comprend :
la transmission des secondes informations de facturation au second système de facturation via la seconde interface sur la base de la session de facturation réétablie.

4. Procédé selon la revendication 1, dans lequel
le premier système de facturation est un système de facturation en ligne et le second système de facturation est un système de facturation convergé ; ou
le premier système de facturation est un système de facturation convergé et le second système de facturation est un système de facturation en ligne ; ou
le premier système de facturation est un système de facturation hors ligne et le second système de facturation est un système de facturation convergé ; ou
le premier système de facturation est un système de facturation convergé et le second système de facturation est un système de facturation hors ligne ; ou
le premier système de facturation est un système de facturation convergé et le second système de facturation est un système de facturation en ligne et un système de facturation hors ligne ; ou
le premier système de facturation est un système de facturation en ligne et le second système de facturation est un système de facturation hors ligne ; ou
le premier système de facturation est un système de facturation hors ligne et le second système de facturation est un système de facturation en ligne.

5. Support de stockage lisible par ordinateur stockant un programme informatique, dans lequel le programme informatique, lorsqu'il est exécuté par un processeur, amène le processeur à exécuter le procédé de facturation selon l'une des revendications 1 à 4.

6. Appareil de facturation, comprenant :
un module de sélection (901), configuré pour sélectionner un premier système de facturation parmi N systèmes de facturation connectés pour un utilisateur en fonction des informations de l'utilisateur, dans lequel N est un nombre entier supérieur ou égal à 2, les informations de l'utilisateur comprennent au moins un élément sélectionné dans un groupe constitué de : numéro d'abonné, caractéristique de facturation, numéro d'identification d'abonné mobile international, IMSI, nom du point d'accès, APN, localisation, noeud de support de service général de radiocommunication par paquets, SGSN et réseau mobile terrestre public, PLMN ; et dans lequel les N systèmes de facturation connectés comprennent : un système de facturation en ligne et un système de facturation convergé ; ou un système de facturation hors ligne et un système de facturation convergé ; ou un système de facturation en ligne, un système de facturation hors ligne et un système de facturation convergé ;
un premier module de facturation (902), configuré pour transmettre, par le premier système de facturation, des premières informations de facturation de l'utilisateur à un domaine de tarification pour la facturation, dans lequel les premières informations de facturation sont des informations de facturation hors ligne, ou des informations de facturation en ligne, ou une combinaison d'informations de facturation hors ligne et d'informations de facturation en ligne ; et
un second module de facturation (1001), configuré pour commuter vers une transmission, par un second système de facturation, de secondes informations de facturation de l'utilisateur à un domaine de tarification pour la facturation, en réponse au fait que le premier système de facturation soit indisponible, dans lequel les secondes informations de facturation sont des informations de facturation hors ligne, ou des informations de facturation en ligne, ou une combinaison d'informations de facturation hors ligne et d'informations de facturation en ligne ;
dans lequel le second système de facturation est un ou plusieurs systèmes de facturation ou des systèmes de facturation disponibles dans (N-1) systèmes de facturation, à l'exception du premier système de facturation dans les N systèmes de facturation connectés.

7. Système de facturation, comprenant l'appareil de facturation selon la revendication 6, N systèmes de facturation (1102) et un domaine de tarification (1103), dans lequel l'appareil de facturation est connecté à un système de facturation respectif via une interface respective ; et
un premier système de facturation dans les N systèmes de facturation (1102) est configuré pour transmettre les premières informations de facturation de l'utilisateur au domaine de tarification (1103) ;
un second système de facturation dans les N systèmes de facturation (1102) est configuré pour transmettre les secondes informations de facturation de l'utilisateur au domaine de tarification (1103) ; et
le domaine de tarification (1103) est configuré pour facturer en fonction des premières informations de facturation de l'utilisateur.
